# EUROPÄISCHE PATENTSCHRIFT

(11) **EP 1 670 870 B1**
(45) Veröffentlichungstag und Bekanntmachung des Hinweises auf die Patenterteilung: **23.07.2008**
(21) Anmeldenummer: 04765385.2
(22) Anmeldetag: 18.09.2004
(51) Int. Cl.: C09J 161/00, C09J 161/28

(54) **BINDEMITTELSYSTEM ENTHALTEND AMINOPLASTHARZE, COPOLYMERE AUS N-FUNKTIONALISIERTEN ETHYLENISCH UNGESÄTTIGTEN MONOMEREN UND GEGEBENENFALLS VINYLALKOHOL UND SÄURE**
BINDING AGENT SYSTEM CONTAINING AMINOPLASTIC RESINS, COPOLYMERS FROM N-FUNCTIONALIZED ETHYLENICALLY UNSATURATED MONOMERS AND OPTIONALLY VINYL ALCOHOL AND ACID
SYSTEME DE LIANT CONTENANT DES RESINES AMINOPLASTES, DES COPOLYMERES FORMES A PARTIR DE MONOMERES ETHYLENIQUEMENT INSATURES A FONCTION N, ET EVENTUELLEMENT DU VINYL ALCOOL ET DES ACIDES

(30) Priorität: 26.09.2003 DE 10345095
(43) Veröffentlichungstag der Anmeldung: 21.06.2006
(73) Patentinhaber: BASF SE, 67056 Ludwigshafen (DE)
(72) Erfinder: WEINKÖTZ, Stephan, 67473 Lindenberg (DE); PFÜTZE, Eberhard, 67069 Ludwigshafen (DE); SANDOR, Mario, 67283 Obrigheim (DE)
(86) Internationale Anmeldenummer: PCT/EP2004/010494
(87) Internationale Veröffentlichungsnummer: WO 2005/030895

(56) Entgegenhaltungen:
- WO-A-01/70898
- WO-A-02/068178
- DE-A- 10 035 412
- DE-A- 19 930 525
- DE-C- 681 324
- US-A- 6 024 943

## Beschreibung

Die vorliegende Erfindung betrifft ein Bindemittelsystem enthaltend Aminoplastharze, Copolymere aus N-funktionalisierten ethylenisch ungesättigten Monomeren und gegebenenfalls Vinylalkohol und eine oder mehrere Säuren bzw. säuregenerierende Substanzen. Die Erfindung betrifft ferner ein Verfahren zur Herstellung von verleimten Werkstoffen unter Verwendung des genannten Bindemittelsystems und Holzwerkstoffe, die dieses Bindemittelsystem enthalten.

Die am häufigsten verwendeten Bindemittelsysteme, deren Anwendungsbereich in der Holzindustrie liegt, bestehen aus Melamin, Harnstoff und/oder Formaldehyd. Der Nachteil dieser Harze liegt in der langen Aushärtezeit bei Raumtemperatur. Ferner ist häufig die offene Zeit, d.h. die Zeit zwischen dem Leimauftrag und dem Verpressen, zu kurz für eine praktikable Anwendbarkeit. Es besteht die Gefahr, dass das Harz aushärtet, bevor es mit dem zu verleimenden Holzwerkstoff in Kontakt gekommen ist. Häufig wird weiterhin eine Nachhärtungszeit von mehreren Tagen benötigt, bevor die verleimten Holzwerkstoffe an den Kunden ausgeliefert werden. Um die Haftungsleistung zu erhöhen, werden die Aminoplastharze mit Dispersionen von Polymeren aus Vinyl-, Acryl- oder Butadien-Styrol-Einheiten gemischt.

DE-A 199 30 525 offenbart ein Aminoplastsystem beinhaltend Polyethylenimin oder Polyvinylamin und Aminoplast zur Herstellung von MDF (Mitteldichten Faserplatten).

EP-A 501 174 offenbart einen Härter für Harnstoff-Formaldehyd-Bindemittel aufgebaut aus einer wässrigen Emulsion aus Polyvinylacetat mit nachvernetzbaren Gruppen, ein Ammoniumsalz und Harnstoff.

WO 02/68178 beschreibt einen Härter für Aminoplastharze beinhaltend teilweise funktionalisiertes Polyvinylacetat; eine Säure, ein saures Salz und/oder eine Säure generierendes Salz; sowie übliche Additive. Ferner wird ein Verfahren offenbart, in dem der Härter und der Kleber getrennt aufgetragen, danach zusammengeführt und unter Druck ausgehärtet werden. Das getrennte Auftragen von Härter und Kleber ist ebenfalls in der DE-A-6 81 324 und der DE-A-100 35 412 beschrieben.

WO 01/70898 beschreibt ein Bindemittelsystem beinhaltend ein verethertes Aminoharz, teilweise funktionalisiertes Polyvinylacetat, organische Säuren und Polyvinylalkohol.

Die japanische Offenlegungsschrift JP 2002 322451 offenbart ein Kondensationsharz, das ein teilweise verseiftes Vinylalkohol Polymersystem mit N-Vinylamidgruppen beinhaltet. Das Polymersystem wird vor der Kondensationsreaktion der Amino- oder Phenolkomponente und der Aldehydkomponente zugegeben und liegt folglich einkondensiert im Aminoplastharz vor.

Die US-A-6 024 943 offenbart eine Mischung aus 2,5 g (1,3 Gew.-%) Melaminkondensat, 2,5 g (1,3 Gew.-%) Polyvinylakohol, 2,8 g (1,5 Gew.-%) Natriumdihydrogenphosphat und 182,2 g (95,9 Gew.-%) Wasser. Sie offenbart wasser-unlösliche feste Partikel, die einen festen organischen Polymerkern haben und an deren Außenseite ein weiteres Polymer angelagert ist, um zumindest eine teilweise Beschichtung des Kerns zu formen, die durchlässig für Flüssigkeiten ist.

Trotz der vielseitigen Bindemittelsysteme, die im Stand der Technik beschrieben sind, gibt es weiterhin Verbesserungsbedarf in Hinblick auf die Bindefestigkeit, die Aushärtungszeit und die offene Zeit, insbesondere bei Raumtemperaturverarbeitungen.

Demnach bestand die Aufgabe darin, ein Bindemittelsystem aufzuzeigen, das bei Raumtemperatur oder niedrigeren Temperaturen schnell aushärtet, eine ausreichend offene Zeit und sehr gute Bindefestigkeit aufweist. Weiter sollen mit Hilfe dieses Bindemittels verleimte Werkstoffe, insbesondere Holzwerkstoffe, bereitgestellt werden, die stark zusammenhaften und den üblichen Standards entsprechen.

Überraschend wurde ein Bindemittelsystem enthaltend
(a) 5 bis 70 Gew.-% Aminoplastharz,
(b) 0,1 bis 15 Gew.-% Copolymer(e) aus ausschließlich N-funktionalisierten ethylenisch ungesättigten Monomeren und/oder Copolymer(e) aus mindestens einem N-funktionalisierten ethylenisch ungesättigten Monomer und Vinylalkohol
(c) 0,5 bis 30 Gew.-% Säure, ein saures Salz und/oder ein eine Säure generierendes Salz,
jeweils bezogen auf das Gesamtgewicht des Bindemittelsystems, gefunden, das sehr kurze Aushärtezeiten bei Raumtemperatur und eine lange offene Zeit beim Verleimen aufweist.

Das in dem erfindungsgemäßen Bindemittelsystem verwendete Aminoplastharz ist typischerweise ein Harnstoff-Formaldehyd-, ein Melamin-Harnstoff-Formaldehyd-, ein Melamin-Formaldehyd-Harz oder Mischungen hieraus. Diese Harze können mit Alkoholen, insbesondere Methanol, teilweise oder vollständig verethert sein. Bevorzugt werden veretherte und unveretherte Melamin-Harnstoff-Formaldehyd- und Melamin-Formaldehyd-Harze oder Mischungen hieraus verwendet.

Der Veretherungsgrad der Aminoplastharzmischung aus veretherten und unveretherten Aminoplastharzen liegt vorteilhaft bei 1 bis 95 %, bevorzugt bei 15 bis 80 %, insbesondere bei 20 bis 65 %. Der Veretherungsgrad entspricht dem Verhältnis aus der Anzahl der veretherten Methylolgruppen zu der Anzahl aus den veretherten und unveretherten Methylolgruppen multipliziert mit 100.

Der Anteil der veretherten Aminoplastharze liegt vorteilhaft bei 20 bis 80 Gew.-% bezogen auf die Aminoplastharzmischung (Komponente a)), insbesondere bei 40 bis 60 Gew.-%.

Vorteilhaft wird das Aminoplastharz getrennt von dem Härter hergestellt. Bevorzugt kommt das Aminoplastharz erst nach der Kondensationsreaktion mit dem Härter in Kontakt. Komponenten des Härters sind somit in der Regel nicht in das Aminoplastharz eingearbeitet. Insbesondere kommt das Aminoplastharz erst beim Prozess des Verleimens mit dem Härter in Kontakt.

Im erfindungsgemäßen Bindemittelsystem liegt das Aminoplastharz mit einer Menge von 5 bis 70 Gew.-% (Feststoffgehalt bei 120°C/2h bestimmt) bezogen auf das Gesamtgewicht des Bindemittelsystems (Feststoff inklusive Wasser) vor. Bevorzugt liegt das Aminoplastharz mit 15 bis 65 Gew.-% vor, insbesondere mit 25 bis 60 Gew.-%. Der Feststoffgehalt des Aminoplastharzes beträgt in der Regel 50 bis 80%, bevorzugt 60 bis 75%.

Die Komponenten (b) und (c) stellen in der Regel den Härter dar.

Der Härter beinhaltet als Komponente (b) ein oder mehrere Copolymere aus ausschließlich N-funktionalisierten ethylenisch ungesättigtem Monomeren und/oder mindestens ein Copolymer aus mindestens einem N-funktionalisierten ethylenisch ungesättigten Monomeren und Vinylalkohol. Die N-funktionalisierten Gruppen sind bevorzugt aminische und/oder amidische Stickstoffatome. N-funktionalisierte Monomere sind vorteilhaft Vinylacetamid, Vinylformamid, Vinylamin, Acrylamid, Methacrylamid, N-Alkyl- und N,N-Dialkyl(meth)acrylamid, substituierte (Meth)Acrylamide, wie z.B. Acrylamido-2-methylpropansulfonat, Vinylpyrrolidon und/oder Vinylimidazol. Bevorzugt werden N-funktionalisierte Vinyl-Monomere verwendet. Besonders bevorzugt sind N-funktionalisierte ethylenisch ungesättigte Monomere, deren N-Atom in α-Stellung zur Ethylengruppe steht, wie beispielsweise Vinylacetamid, Vinylformamid, Vinylamin, Vinylpyrrolidon und/oder Vinylimidazol. Ganz besonders bevorzugt sind Vinylamin und/oder Vinylformamid.

Die Komponente (b) ist vorteilhaft wasserlöslich. Die Löslichkeit in Wasser bei Raumtemperatur beträgt mindestens 2 g /100 g, bevorzugt mindestens 4 g, besonders bevorzugt mindestens 6 g.

Wenn zur Herstellung des Copolymers Vinylalkohol verwendet wird, so kann das Gewichtsverhältnis von Vinylalkohol zu N-funktionalisiertem ethylenisch ungesättigten Monomer 1:99 bis 95:5, bevorzugt 50:50 bis 90:10, insbesondere 75:25 bis 90:10 betragen.

Bevorzugt besteht die Komponente (b) aus einem oder mehreren Copolymeren aus N-funktionalisierten ethylenisch ungesättigten Monomeren und Vinylalkohol, insbesondere aus Vinylformamid und/oder Vinylamin und Vinylalkohol oder aus Vinylacetamid und Vinylalkohol, besonders bevorzugt aus Vinylformamid und/oder Vinylamin und Vinylalkohol, ganz besonders bevorzugt aus Vinylamin und Vinylalkohol. Das Gewichtsverhältnis von Vinylalkohol zu Vinylformamid, Vinylamin und/oder Vinylacetamid liegt vorteilhaft bei 95:5 bis 75:25, insbesondere bei 90:10 bis 80:20.

Das Gewichtsmittel der Molmasse des Copolymers liegt vorteilhaft bei 5000 - 500000, bevorzugt 10000 - 250000, besonders bevorzugt 20000 - 100000. 4 %ige wässrige Lösungen dieser Copolymere besitzen bei 20°C bevorzugt eine Viskosität von 2 - 70 mPas, besonders bevorzugt 10-60 mPas, ganz besonders bevorzugt 20-50 mPas.

Der Härter enthält besonders bevorzugt mindestens ein Copolymer aus Vinylalkolhol und Vinylformamid und/oder Vnylamin.

Im erfindungsgemäßen Bindemittelsystem liegt die Komponente (b) mit einer Menge von 0,1 bis 15 Gew.-% bezogen auf das Gesamtgewicht des Bindemittels vor. Bevorzugt liegt die Komponente (b) mit 0,5 bis 10 Gew.-% vor, insbesondere mit 1 bis 6 Gew.-%.

Das erfindungsgemäße Bindemittelsystem enthält mindestens eine Säure, ein saures Salz und/oder ein Säure generierendes Salz (Komponente (c)). Die Wahl der Säure, bzw. des Salzes hängt mit den Charakteristika des Härters zusammen, beispielsweise, wie schnell die Aushärtung nach dem Vermischen des Aminoplastharzes und des Härters erfolgen soll.

Typischerweise werden als Säuren organische Säuren, wie beispielsweise Maleinsäure, Zitronensäure oder Ameisensäure, oder anorganische Säuren, wie beispielsweise Phosphorsäure oder Sulfamidsäure oder Mischungen hieraus verwendet. Bevorzugt sind organische Säuren, insbesondere Ameisensäure.

Unter sauren Salzen werden solche verstanden, die in Wasser eine saure Lösung bilden. Vorteilhaft werden Aluminiumphosphat, Aluminiumnitrat, Aluminiumsulfat oder Aluminiumchlorid oder Mischungen hieraus verwendet.

Unter einem eine Säure generierenden Salz werden solche Salze verstanden, die durch Reaktion mit einer Komponente des Bindemittelsystems eine Säure generieren. Vorteilhaft werden Ammoniumsalze verwendet, wie beispielsweise Ammoniumphosphat, Ammoniumsulfat und/oder Ammoniumchlorid.

Im erfindungsgemäßen Bindemittelsystem liegt die Komponente (c) mit einer Menge von 0,5 bis 30 Gew.-% bezogen auf das Gesamtgewicht des Bindemittelsystems vor. Bevorzugt liegt die Komponente (c) mit 1 bis 20 Gew.-% vor, insbesondere mit 1,5 bis 15 Gew.-%.

Das Bindemittelsystem enthält vorteilhaft eine Dispersion (Komponente (d)). Außerdem können gegebenenfalls übliche Additive (Komponente (e)) enthalten sein.

Bevorzugt beinhaltet der Härter eine Dispersion (d) umfassend mindestens ein Polymer. Das Polymer ist typischerweise ein Homopolymer oder ein Copolymer hergestellt aus einem oder mehreren ethylenisch ungesättigten Monomeren. Beispiele vorteilhafter ethylenisch ungesättigter Monomere sind Vinylmonomere, wie Vinylester, zum Beispiel Vinylacetat, Vinylpropionat, Vinylbutyrat und Comonomere hiervon; Polyacrylate wie beispielsweise Alkylester von acrylischen oder methacrylischen Säuren, wie Methylacrylat, Methylmethacrylat, Ethylacrylat, n-Butylacrylat etc.; Butadien-Styrol und Derivate wie beispielsweise carboxyliertes Butadien-Styrol; substituierte oder unsubstituierte Mono- und Dialkylester der alpha, beta- ungesättigten (Di)Carboxylsäuren wie beispielsweise substituierte und unsubstituierte Mono- und Dibutyl-, und Mono- und Diiethylester der Maleinsäure oder die korrespondierenden Ester der Fumarsäure, Zitronensäure oder Itaconsäure, Crotonsäure, (Meth)Acrylsäure; Polyurethane.

Bevorzugt sind Polyvinylacetate und Vnylacetat-Copolymere, insbesondere Ethylen-Vnylacetat-Copolymere. Vorteilhaft enthält das Polymer mindestens 50 Gew.-% bezogen auf das Gesamtgewicht des Monomers Vinylacetat.

Die Polymerdispersion kann Polymere mit nachvernetzbaren Gruppen enthaltend. Diese nachvernetzbaren Gruppen können via Copolymerisation in das Polymer eingeführt werden, in dem ein oder mehrere ethylenisch ungesättigte Monomere mit mindestens einem Monomer beinhaltend mindestens eine nachvemetzbare Gruppen umgesetzt wird. Das Polymer enthält bevorzugt 0 bis 10 Gew.-% an Monomeren mit nachvernetzbaren Gruppen, bevorzugt 0 bis 5 Gew.-%. Mischungen aus Polymeren mit nachvernetzbaren Gruppen und Polymeren ohne nachvemetzbare Gruppen sind ferner bevorzugt, insbesondere Mischungen mit Homo- oder Copolymeren des Vnylacetats. Unter nachvernetzbaren Gruppen werden solche verstanden, die von geringerer Reaktivität sind als ungesättigte Gruppen und somit nicht an der ersten Polymerisationsreaktion beteiligt sind, sondern nur unter bestimmten Bedingungen, beispielsweise sauren Bedingungen, mit anderen reaktiven Gruppen, vorteilhaft am Copolymer und/oder am Aminoplastharz, reagieren.

Geeignete nachvernetzbare Gruppen sind vorteilhaft N-Alkylol-, N-Alkoxymethyl-, und/oder Glycidyl-Gruppen, beispielhaft sind hier die in der WO 01/70898 und WO 02/68178 genannten erwähnt.

Im erfindungsgemäßen Bindemittelsystem liegt das Polymer der Dispersion (d) mit einer Menge von 0 bis 30 Gew.-% bezogen auf das Gesamtgewicht des Bindemittelsystems vor. Bevorzugt liegt das Polymer der Dispersion mit 1 bis 25 Gew.-% vor, insbesondere mit 3 bis 20 Gew.-%.

Der Härter hat üblicherweise einen pH-Wert von 1 bis 6,5, insbesondere 1,3 bis 3. Die Viskosität des Härters liegt bevorzugt über 300 mPas, besonders bevorzugt über 1000 mPas (bei Raumtemperatur und einer Scherrate von 100 s⁻¹). Er zeigt vorteilhaft ein pseudoplastisches Verhalten. Der Wirkstoffgehalt des Härters ((b)+(c)+ggf. (d) + ggf. (e)) liegt zwischen 10 und 70 Gew.-%, bevorzugt zwischen 20 und 55 Gew.-%, der restliche Anteil besteht aus Wasser.

Das erfindungsgemäße Bindemittelsystem kann gegebenenfalls übliche Additive enthalten (siehe beispielsweise M. Dunky, P. Niemz, Holzwerkstoffe und Leime, Technologie und Einflussfaktoren, Springer, 2002, Seite 436 - 444, Kapitel 2.7 "Zusatzstoffe"). Hierzu zählen Füllstoffe (siehe Zeppenfeld, Klebstoffe in der Holz- und Möbelindustrie, Buchverlag Leipzig, 1. Auflage) wie beispielsweise Erdalkalisilikate, Aluminiumsilikate wie Kaolin, Kieselerde, pyrogene und gefällte Kieselsäuren, Erdalkalicarbonate, Erdalkalisulfate, Metalloxide, Fasern wie beispielsweise Glas, Glimmer, Cellulose. Weitere Zusatzstoffe sind vorteilhaft Mehle, Stärken, modifizierte Stärke, modifizierte Cellulose, beispielsweise Methylcellulose, Carboxymethylcellulose, Hydroxyethylcellulose, Verdicker wie in der WO 02/68178 genannt, Farbstoffe, Formaldehydfänger, Tenside, Entschäumer, Lösungsmittel wie beispielsweise Diethylengylkol sowie weitere dem Fachmann bekannte Additive, ausgenommen Polyvinylalkohol. Bevorzugt werden Kaoline, Kieselsäuren, Cellulosederivate, Glykole und Tenside verwendet.

Die Komponente (e) kann entweder in dem Härter oder im Aminoplast oder in beiden Komponenten vorhanden sein, vorteilhaft ist die Komponente (e) zu 0 bis 20 Gew.-%, bevorzugt 0 bis 10 Gew.-%, in dem Härter und zu 0 bis 20 Gew.-%, bevorzugt 0 bis 10 Gew.-%, in dem Aminoplast vorhanden. Im erfindungsgemäßen Bindemittelsystem liegen die üblichen Additive mit einer Menge von 0 bis 25 Gew.-% bezogen auf das Gesamtgewicht des Bindemittelsystems vor. Bevorzugt liegen die üblichen Additive mit 0 bis 10 Gew.-% vor, insbesondere mit 0 bis 5 Gew.-%.

Die für das Bindemittelsystem angegebenen Gewichtsprozente der Komponenten (a) bis (e) beziehen sich auf die reinen, nicht-wässrigen Einsatzstoffe. Die Mengenangaben der Komponenten (a) bis (e) ergänzen sich mit Wasser auf 100 Gew.-%. Der Feststoffgehalt bzw. Wirkstoffgehalt des Bindemittelsystems liegt in der Regel bei 25 bis 75 Gew.-%, bevorzugt bei 40 bis 65 Gew.-%, der restliche Anteil besteht aus Wasser. Obwohl ein flüssiges Bindemittelsystem bevorzugt ist, ist auch ein pulverförmiges Bindemittelsystem möglich.

Das erfindungsgemäße Bindemittelsystem ist besonders zum Verleimen von Werkstoffen geeignet. Es kann hergestellt werden, in dem die Komponenten (a) mit (b), (c) und gegebenenfalls (d) und/oder (e) gemischt werden. Danach wird das Bindemittelsystem auf das zu verleimende Holz aufgetragen.

Vorteilhaft wird das Aminoplastharz [(a) und ggf. (e)] getrennt von dem Härter [(b), (c) und ggf. (d) und/oder (e)] auf den Werkstoff aufgetragen.

Das Aminoplastharz kann aber auch gemischt mit der Komponente (b) getrennt von den Komponenten (c) und gegebenenfalls (d) aufgetragen werden. Ferner kann das Aminoplastharz gemischt mit der Komponente (d) getrennt von den Komponenten (b) und (c) aufgetragen werden. Die Komponente (e) kann in beiden Fällen in allen Komponentengemischen vorhanden sein.

Bevorzugt wird das Aminoplastharz getrennt von dem Härter beinhaltend (b) und (c) und gegebenenfalls (d) aufgetragen, wobei die Komponente (e) in beiden Gemischen vorliegen kann.

Die beiden Komponenten können jeweils in Form von Streifen, in Form von Filmen und/oder als Spray aufgetragen werden. Die Gesamtauftragsmenge liegt in der Regel bei 20 bis 500 g/m², insbesondere bei 250 bis 450 g/m².

Es ist auch eine Kombination aus den verschiedenen Auftragsarten möglich. Bevorzugt wird der Härter in Form von parallelen Streifen und das Aminoplast als Film aufgetragen, insbesondere wird bei dieser Variante der Härter eine gewisse Zeit, etwa 0,1 bis 2 Sekunden, vor dem Aminoplast aufgetragen.

Das erfindungsgemäße Bindemittelsystem ist nicht beschränkt auf eine spezielle Anwendung, jedoch wird es vorteilhaft in der Holzindustrie verwendet. Die Erfindung umfasst somit den Holzwerkstoff, der das erfindungsgemäße Bindemittel enthält. Das Bindemittelsystem wird bevorzugt zum flächigen Verleimen von Holz verwendet beispielsweise bei Parkett, Rollenheißkaschierungen (Folien auf beispielsweise Spanplatten), Furnieren, Sperrholz, Einschichtplatten, Mehrschichtplatten und Schalungsplatten. Insbesondere wird das Bindemittelsystem zum flächigen Verleimen für tragende Anwendungen, beispielsweise bei Brettschichtholz, Duo- oder Triobalken verwendet (siehe auch WO 02/068178 oder EP-A 860 251).

Im Rahmen dieser Erfindung sind unter dem Begriff "Holzwerkstoff" Materialien zu verstehen, die durch Zerkleinern von Holz und anschließendes Zusammenfügen der Strukturelemente erzeugt werden. Je nach Größe und Form der Strukturelemente unterscheidet man zwischen Vollholz-, Furnier-, Span-, Faser- und Verbund-Werkstoffen (siehe M. Dunky, P. Niemz, Holzwerkstoffe und Leime, Technologie und Einflussfaktoren, Springer, 2002, Seite 3 - 8).

Das erfindungsgemäße Bindemittelsystem eignet sich besonders für Anwendungen, bei denen eine hohe Bindefestigkeit erforderlich ist.

### Beispiele:

Komponente (a) Mit Methanol verethertes Melaminharz mit einem Melamin : Formaldehyd-Verhältnis von 2,7 und einem Veretherungsgrad von 50%
Komponente (b) Vinylalkohol-Vinylformamid-Copolymere mit einem Vinylalkohol:Vinylformamidmassenverhältnis von 82:12
   Polyvinylalkohol "Mowiol 30-92" der Firma Kuraray
Komponente (d) Ethylen-Vinylacetat-Dispersion _{"}B340" der Firma Türmerlein GmbH

**Tabelle 1: Zusammensetzung der Komponenten**

| Beispiele | Komponenten | | | | |
|---|---|---|---|---|---|
| | (a) | (b) | (c) | (d) | Rest |
| 1 | Verethertes Melaminharz | Vinylalkohol-Vinylformamid-Copolymere | Ameisensäure | Polyvinylacetat-Dispersion | Wasser |
| Gew.-% | 35^{a)} | 3,5 | 5,5 | 10^{b)} | 46 |
| Vergleichsbeispiel 1 | Verethertes Melaminharz | Polyvinylalkohol | Ameisensäure | Polyvinylacetat-Dispersion | Wasser |
| Gew.-% | 35^{a)} | 3,5 | 5,5 | 10^{b)} | 46 |
| Vergleichsbeispiel2 | Verethertes Melaminharz | - | Ameisensäure | Polyvinylacetat-Dispersion | Wasser |
| Gew.-% | 35^{a)} | | 5,5 | 10^{b)} | 49,5 |
| Vergleichsbeispiel 3 | Verethertes Melaminharz | - | Ameisensäure | - | Wasser |
| Gew.-% | 35^{a)} | | 5.5 | | 59,5 |

| | | | | | |
|---|---|---|---|---|---|
| ^{a)}Gew.-% bezieht sich auf experimenteil bestimmten Feststoffgehalt (120 °C/12h) ^{b)}Gew.-% bezieht sich auf den Feststoffgehalt der Dispersion | | | | | |

Der Leim (Komponente (a)) wurde unmittelbar vor der Verwendung mit dem Härter (Komponenten (b), (c) und (d) im Gewichtsverhältnis 100:100 gemischt. Nach 10 Minuten Wartezeit erfolgte die Verleimung von Buchenholz wie in EN 302-1 beschrieben (Fugendicke 0,5 mm). Nach 6h Presszeit bei 20 ± 2°C und 65 ± 5 % Luftfeuchte wurde die Bindefestigkeit gemäß EN 301 ermittelt.

| | Erfindungsgemäßes Beispiel 1 | Vergleichsbeispiel 1 | Vergleichsbeispiel 2 | Vergleichsbeispiel 3 |
|---|---|---|---|---|
| Bindefestigkeit [N/mm²] | 6.3 | 4.3 | 2.5 | < 2 |

## Patentansprüche

1. Bindemittelsystem enthaltend
(a) 5 bis 70 Gew.-% Aminoplastharz
(b) 0,1 bis 15 Gew.-% Copolymer(e) aus ausschließlich N-funktionalisierten ethylenisch ungesättigten Monomeren und/oder Copolymer(e) aus mindestens einem N-funktionalisierten ethylenisch ungesättigten Monomer und Vinylalkohol
(c) 0,5 bis 30 Gew.-% Säure, ein saures Salz und/oder ein eine Säure generierendes Salz,
jeweils bezogen auf das Gesamtgewicht des Bindemittelsystems.

2. Bindemittelsystem nach Anspruch 1, in dem die Komponente (b) wasserlöslich ist.

3. Bindemittelsystem nach den Ansprüchen 1 und 2, worin die N-funktionalisierten ethylenisch ungesättigten Monomere ausgewählt sind aus der Gruppe Vinylacetamid, Vinylformamid, Vinylamin, Vinylpyrrolidon und Vinylimidazol.

4. Bindemittelsystem nach Anspruch 3, worin als Monomere Vinylformamid und/oder Vinylamin verwendet wurden.

5. Bindemittelsystem nach den Ansprüchen 1 bis 4, worin in der Komponente (b) das Gewichtsverhältnis des Vinylalkohols zu dem N-funktionalisierten ethylenisch ungesättigten Monomer 90:10 bis 50:50 beträgt.

6. Bindemittelsystem nach den Ansprüchen 1 bis 5, worin die Komponenten (a) bis (c) in folgenden Mengen bezogen auf das Gesamtgewicht des Bindemittelsystems vorliegen:
(a) von 15 bis 65 Gew.-%,
(b) von 0,5 bis 10 Gew.-%,
(c) von 1 bis 20 Gew.-%,
jeweils bezogen auf das Gesamtgewicht des Bindemittelsystems.

7. Bindemittelsystem nach den Ansprüchen 1 bis 6, worin als Aminoplastharz ein Melamin-Harnstoff-Formaldehyd-Harz eingesetzt wird.

8. Bindemittelsystem nach den Ansprüchen 1 bis 7, worin als Aminoplastharz ein verethertes Melamin-Formaldehyd-Harz eingesetzt wird.

9. Härter für ein Bindemittelsystem enthaltend Copolymer(e) aus Vinylalkohol und Vinylformamid.

10. Verfahren zum Verleimen von Werkstoffen, **dadurch gekennzeichnet, dass** man ein Bindemittelsystem gemäß den Ansprüchen 1 bis 8 auf den Werkstoff aufträgt.

11. Verfahren nach Anspruch 10, **dadurch gekennzeichnet, dass** man Holzwerkstoffe verleimt.

12. Holzwerkstoff, enthaltend ein Bindemittel gemäß den Ansprüchen 1 bis 8.

## Claims

1. A binder system comprising
(a) 5 to 70% by weight of an aminoplast resin
(b) 0.1 to 15% by weight of copolymer(s) of exclusively N-functionalized ethylenically unsaturated monomers and/or copolymer(s) of at least one N-functionalized ethylenically unsaturated monomer and vinyl alcohol
(c) 0.5 to 30% by weight of an acid, an acidic salt and/or a salt generating an acid,
in each case based on the total weight of the binder system

2. The binder system according to claim 1, in which the component (b) is water-soluble.

3. The binder system according to claims 1 and 2, wherein the N-functionalized ethylenically unsaturated monomers are selected from the group consisting of vinylacetamide, vinylformamide, vinylamine, vinylpyrrolidone and vinylimidazole.

4. The binder system according to claim 3, wherein vinylformamide and/or vinylamine were used as monomers.

5. The binder system according to any of claims 1 to 4, wherein, in the component (b), the weight ratio of vinyl alcohol to the N-functionalized ethylenically unsaturated monomer is from 90:10 to 50:50.

6. The binder system according to any of claims 1 to 5, wherein the components (a) to (c) are present in the following amounts, based on the total weight of the binder system:
(a) from 15 to 65% by weight,
(b) from 0.5 to 10% by weight,
(c) from 1 to 20% by weight,
in each case based on the total weight of the binder system.

7. The binder system according to any of claims 1 to 6, wherein a melamine/urea/formaldehyde resin is used as the aminoplast resin.

8. The binder system according to any of claims 1 to 7, wherein an etherified melamine/formaldehyde resin is used as the aminoplast resin.

9. A curing agent for a binder system comprising copolymer(s) of vinyl alcohol and vinylformamide.

10. A process for gluing materials, wherein a binder system according to any of claims 1 to 8 is applied to the material.

11. The process according to claim 10, wherein wood-base materials are glued.

12. A wood-base material comprising a binder according to any of claims 1 to 8.

## Revendications

1. Système d'agents liants contenant :
(a) 5 à 70 % en poids de résine aminoplaste,
(b) 0,1 à 15 % en poids de copolymère(s) constitué(s) exclusivement de monomères à insaturation éthylénique N-fonctionnalisés et/ou de copolymère(s) constitué(s) d'au moins un monomère à insaturation éthylénique N-fonctionnalisé et de l'alcool vinylique,
(c) 0,5 à 30 % en poids d'un acide, d'un sel acide et/ou d'un sel générateur d'acide,
respectivement, par rapport au poids total du système d'agents liants.

2. Système d'agents liants selon la revendication 1, dans lequel le composant (b) est hydrosoluble.

3. Système d'agents liants selon les revendications 1 et 2, dans lequel les monomères à insaturation éthylénique N-fonctionnalisés sont choisis dans le groupe constitué du vinylacétamide, du vinylformamide, de la vinylamine, de la vinylpyrrolidone et du vinylimidazole.

4. Système d'agents liants selon la revendication 3, dans lequel on utilise du vinylformamide et/ou de la vinylamine comme monomères.

5. Système d'agents liants selon les revendications 1 à 4, dans lequel le rapport pondéral de l'alcool vinylique au monomère à insaturation éthylénique N-fonctionnalisé est de 90:10 à 50:50 dans le composant (b).

6. Système d'agents liants selon les revendications 1 à 5, dans lequel les composants (a) à (c) sont présents, par rapport au poids total du système d'agents liants, en quantités suivantes :
(a) 15 à 65 % en poids,
(b) 0,5 à 10 % en poids,
(c) 1 à 20 % en poids,
respectivement, par rapport au poids total du système d'agents liants.

7. Système d'agents liants selon les revendications 1 à 6, dans lequel on utilise une résine à base de mélamine-urée-formaldéhyde comme résine aminoplaste.

8. Système d'agents liants selon les revendications 1 à 7, dans lequel on utilise une résine éthérifiée à base de mélamine-formaldéhyde comme résine aminoplaste.

9. Durcisseur pour un système d'agents liants contenant un ou plusieurs copolymères constitués d'alcool vinylique et de vinylformamide.

10. Procédé pour coller des matériaux, **caractérisé en ce que** l'on applique sur le matériau un système d'agents liants selon les revendications 1 à 8.

11. Procédé selon la revendication 10, **caractérisé en ce que** l'on colle des matériaux dérivés du bois.

12. Matériau dérivé du bois, contenant un agent liant selon les revendications 1 à 8.
